# EUROPEAN PATENT APPLICATION

(11) **EP 4 134 900 A2**
(43) Date of publication of application: **15.02.2023**
(21) Application number: 22210615.5
(22) Date of filing: 30.11.2022
(51) Int. Cl.: G06Q 30/0601, G06Q 30/0251

(54) **METHOD AND APPARATUS FOR RECOMMENDING CONTENT, METHOD AND APPARATUS FOR TRAINING RANKING MODEL, DEVICE, AND STORAGE MEDIUM**

(30) Priority: 30.11.2021 CN 202111443352
(71) Applicant: Beijing Baidu Netcom Science and Technology Co., Ltd., Beijing 100085 (CN)
(72) Inventor: XIA, Xiaoling, Beijing, 100085 (CN); XU, Wei, Beijing, 100085 (CN); CAO, Chengtai, Beijing, 100085 (CN); CHEN, Kunbin, Beijing, 100085 (CN); HE, Bolei, Beijing, 100085 (CN); HE, Wei, Beijing, 100085 (CN)
(74) Representative: Nederlandsch Octrooibureau

(57) **Abstract**

The present disclosure provides a method and an apparatus for recommending content, a method and an apparatus for training a ranking model, a device, and a storage medium, which relate to a field of computer technology, in particular to fields of big data, deep learning, and intelligent search technology. A specific implementation solution includes: determining a scenario for recommendation; selecting target sub-models corresponding to the scenario for recommendation from at least two sub-models, where the at least two sub-models include sub-models of at least two dimensions, the sub-models of the at least two dimensions are trained for the at least two dimensions based on general feature data and feature data of the at least two dimensions, the general feature data and the feature data of the at least two dimensions are constructed based on behavior information, and the behavior information includes behavior information of at least two scenarios; and recommending content for the scenario for recommendation by using a combination of the target sub-models. A ranking module for each scenario is not required to be constructed in the present disclosure, so that the model training and the recommendation process is simplified.

## Description

### TECHNICAL FIELD

The present disclosure relates to a field of computer technology, and in particular, to fields of big data, deep learning, and intelligent search technology.

### BACKGROUND

With the rapid development of computer technology, more and more contents are required to be acquired through computer processing then transmitted through the network after the processing, and a content recommendation, such as a news recommendation, a video recommendation, or an advertising recommendation, to users is required in an increasing number of scenarios.

### SUMMARY

The present disclosure provides a method and an apparatus for recommending content, a method and an apparatus for training a ranking model, a device, and a storage medium.

According to a first aspect of the present disclosure, there is provided a method for recommending content, including:
determining a scenario for recommendation;
selecting target sub-models corresponding to the scenario for recommendation from at least two sub-models, where the at least two sub-models include sub-models of at least two dimensions, the sub-models of the at least two dimensions are trained for the at least two dimensions based on general feature data and feature data of the at least two dimensions, the general feature data and the feature data of the at least two dimensions are constructed based on behavior information, and the behavior information includes behavior information of at least two scenarios; and
recommending content for the scenario for recommendation by using a combination of the target sub-models.

According to a second aspect of the present disclosure, there is provided a method for training a ranking model, including:
acquiring behavior information of at least two scenarios;
constructing feature data based on the behavior information, where the feature data includes general feature data and feature data of at least two dimensions; and
for the at least two dimensions, training sub-models of the at least two dimensions based on the general feature data and the feature data of the at least two dimensions.

According to a third aspect of the present disclosure, there is provided an apparatus for recommending content, including:
a determination module, configured to determine a scenario for recommendation;
a selection module, configured to select target sub-models corresponding to the scenario for recommendation from at least two sub-models, where the at least two sub-models include sub-models of at least two dimensions, the sub-models of the at least two dimensions are trained for the at least two dimensions based on general feature data and feature data of the at least two dimensions, the general feature data and the feature data of the at least two dimensions are constructed based on behavior information, and the behavior information includes behavior information of at least two scenarios; and
a recommendation module, configured to recommend content for the scenario for recommendation by using a combination of the target sub-models.

According to a fourth aspect of the present disclosure, there is provided an apparatus for training a ranking model, including:
an acquisition module, configured to acquire behavior information of at least two scenarios;

a feature construction module, configured to: construct feature data based on the behavior information, where the feature data includes general feature data and feature data of at least two dimensions; and
a sub-module training module, configured to: for the at least two dimensions, train sub-models of at least two dimensions based on the general feature data and the feature data of the at least two dimensions.

According to a fifth aspect of the present disclosure, there is provided an electronic device, including:
at least one processor; and

a memory communicatively connected to the at least one processor,
where the memory stores instructions executable by the at least one processor, and the instructions, when executed by the at least one processor, cause the at least one processor to implement the method described in the first aspect.

According to a sixth aspect of the present disclosure, there is provided an electronic device, including:
at least one processor; and
a memory communicatively connected to the at least one processor,
where the memory stores instructions executable by the at least one processor, and the instructions, when executed by the at least one processor, cause the at least one processor to implement the method described in the second aspect.

According to a seventh aspect of the present disclosure, there is provided a non-transitory computer-readable storage medium having computer instructions stored thereon, where the computer instructions allow a computer to implement the method described in the first aspect.

According to an eighth aspect of the present disclosure, there is provided a non-transitory computer-readable storage medium having computer instructions stored thereon, where the computer instructions allow a computer to implement the method described in the second aspect.

According to a ninth aspect of the present disclosure, there is provided a computer program product containing a computer program, where the computer program, when executed by a processor, causes the processor to implement the method described in the first aspect.

According to a tenth aspect of the present disclosure, there is provided a computer program product containing a computer program, where the computer program, when executed by a processor, causes the processor to implement the method described in the second aspect.

According to the present disclosure, it is possible to perform a flexible combination based on a plurality of sub-models, so as to realize a targeted recommendation for each scenario without a separate construction of a ranking model for each scenario.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solution and do not constitute a limitation to the present disclosure.
FIG. 1 shows a flowchart of a method for recommending content provided by an embodiment of the present disclosure;
FIG. 2 shows another flowchart of a method for recommending content provided by an embodiment of the present disclosure;
FIG. 3 shows yet another flowchart of a method for recommending content provided by an embodiment of the present disclosure;
FIG. 4 shows a flowchart of a method for training a ranking model provided by an embodiment of the present disclosure;
FIG. 5 shows a schematic diagram of an application of a method for recommending content provided by an embodiment of the present disclosure;
FIG. 6 shows a schematic structural diagram of an apparatus for recommending content provided by an embodiment of the present disclosure;
FIG. 7 shows another schematic structural diagram of an apparatus for recommending content provided by an embodiment of the present disclosure;
FIG. 8 shows yet another schematic structural diagram of an apparatus for recommending content provided by an embodiment of the present disclosure;
FIG. 9 shows a schematic structural diagram of an apparatus for training a ranking model provided by an embodiment of the present disclosure;
FIG. 10 shows another schematic structural diagram of an apparatus for training a ranking model provided by an embodiment of the present disclosure;
FIG. 11 shows a block diagram of an electronic device for implementing a method for recommending content in an embodiment of the present disclosure; and
FIG. 12 shows a block diagram of an electronic device for implementing a method for training a ranking model in an embodiment of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

Content recommendation may be made by directly using a same recommendation model, or may be performed by using various recommendation models, each of which is separately constructed for a single scenario for recommendation. However, the direct use of the same recommendation model for all scenarios for recommendation may be inapplicable to different user interests and preferences, item types, etc. in various scenarios, resulting in poor recommendation effect. In the process of separately constructing the recommendation model for each scenario, the construction of a recommendation model for a single scenario can only use historical user behavior data generated in the scenario as training data. However, there is fewer user behavior data in each separate scenario. A lack of training data is not conducive to model learning, and a common point of different scenarios will not be used.

For the problem that the direct use of the same recommendation model for all scenarios for recommendation may be inapplicable to different user interests and preferences, item types, etc. in various scenarios, and that the recommendation effect is poor, and for the problem that a robust deep learning model is difficult to be obtained by separately training the recommendation models for the various scenarios, it is considered in embodiments of the present disclosure that, if data from different scenarios are fused together for learning, a large training data set may be constructed to help the model learning, and the common point of different models may be used to comprehensively describe the user interests.

With this regard, in the embodiments of the present disclosure, user behavior data of a plurality of scenarios is used to train a hierarchical model at one time. In other words, at least two sub-models of at least two dimensions are flexibly configured in different scenarios, so as to obtain ranking models with different emphases. That is, a targeted recommendation for each scenario is achieved through a flexible combination based on a plurality of sub-models, for example, a ranking model matched with the scenario may be obtained. As such, it is not necessary to construct a separate ranking model for each scenario respectively. In addition, using data of a plurality of scenario may comprehensively describe a user and dig out deep-level user characteristics, so that the recommendation effect may be improved.

A method for recommending content provided by the embodiments of the present disclosure will be described in detail below.

The method for recommending content provided by the embodiments of the present disclosure may be applied to an electronic device, and specifically, the electronic device may include a server, a terminal, etc.

An embodiment of the present disclosure provides a method for recommending content, which may include: determining a scenario for recommendation; selecting target sub-models corresponding to the scenario for recommendation from at least two sub-models, where the at least two sub-models include sub-models of at least two dimensions, the sub-models of the at least two dimensions are trained for the at least two dimensions based on general feature data and feature data of the at least two dimensions, the general feature data and the feature data of the at least two dimensions are constructed based on behavior information, and the behavior information includes behavior information of at least two scenarios; and recommending content for the scenario for recommendation by using a combination of the target sub-models.

In the embodiments of the present disclosure, after the scenario for recommendation is determined, the target sub-models corresponding to the scenario for recommendation may be selected from at least two pre-trained sub-models, and a combination of the target sub-models may be used to recommend content for the scenario for recommendation. That is, a combination may be made based on a plurality of sub-models, so as to make a recommendation for the scenario for recommendation. In this way, it is not necessary to construct a ranking model for each scenario respectively, which may simplify the recommendation process.

Also, the problem that using the same recommendation model for all scenarios for recommendation may be inapplicable to different user interests and preferences, item types, etc. in various scenarios, and that the recommendation effect is poor may be avoided, and the recommendation effect may be improved.

In addition, the behavior information of the plurality of scenarios are used to construct the feature data, and the sub-models of different dimensions are trained based on the feature data. It is possible to use a large amount of training data for the model training, and make full use of the behavior information in each scenario for the model training, so that the learning ability of the model is improved and the performance of the trained model is improved, thereby improving the ranking performance and the recommendation performance.

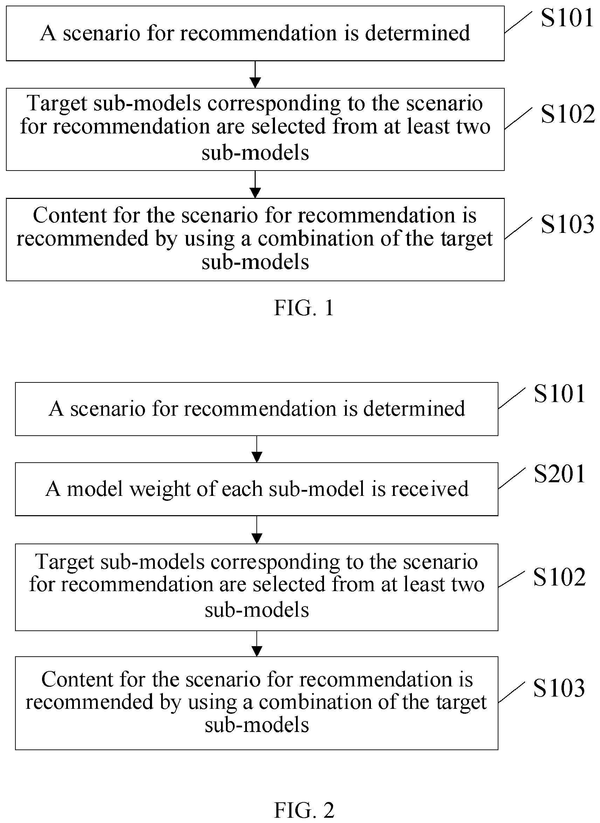

FIG. 1 shows a flowchart of a method for recommending content provided by an embodiment of the present disclosure. Referring to FIG. 1, the method for recommending content provided by the embodiments of the present disclosure may include following S 101 to S 103.

In S 101, a scenario for recommendation is determined.

To understand simply, the scenario for recommendation may indicate that in which scenario the content is to be recommended to the user.

In an implementable embodiment, scenario information of various recommendation scenarios may be stored in advance. After scenario information of the current scenario for recommendation is acquired, the scenario information is compared with the stored scenario information of the recommendation scenarios. If a matching degree of the scenario information with scenario information of a certain recommendation scenario is greater than a preset matching degree threshold, it may be determined that the current scenario for recommendation is a recommendation scenario corresponding to the scenario information having a matching degree with the scenario information being greater than the preset matching degree threshold.

The scenario for recommendation may be any scenario in which content is required to be recommended. For example, a recommendation scenario in the office field may be included, such as a recommendation scenario of internal learning video, a recommendation scenario of forum post, a recommendation scenario of colleagues' dynamics, etc.

In S102, target sub-models corresponding to the scenario for recommendation are selected from at least two sub-models.

The at least two sub-models include sub-models of at least two dimensions.

For the at least two dimensions, the sub-models of the at least two dimensions are trained based on general feature data and feature data of the at least two dimensions.

To understand simply, for a sub-model of each dimension, the sub-model of the dimension is trained based on the general feature data and the feature data of the dimension.

The general feature data and the feature data of the at least two dimensions are constructed based on behavior information, and the behavior information includes behavior information of the at least two scenarios.

The behavior information may represent behavior information of a plurality of users towards a plurality of items.

For example, the sub-models include a sub-model 1, a sub-model 2, a sub-model 3, and a sub-model 4. For the scenario for recommendation, the sub-model 1, the sub-model 2, and the sub-model 3 are selected as the target sub-models for the scenario for recommendation.

Different sub-models have different emphases, and the target sub-model of the scenario for recommendation may be selected according to a correlation between the scenario for recommendation and each sub-model in a practical application. Different types of data (videos, pictures, texts) and different topics of data are required to be recommended for different scenarios, and the users have different preferences. The correlations between the scenario for recommendation and different sub-models may be determined based on the type of the data required to be recommended, the topic of the data required to be recommended for the scenario for recommendation, and the user's preference.

In an implementable embodiment, the pre-trained sub-models in the embodiments of the present disclosure include: a social sub-model, a skill sub-model, an interest sub-model, and a timeliness sub-model. A process of training the social sub-model, skill sub-model, interest sub-model, and timeliness sub-model may include: acquiring behavior information of a plurality of scenarios; constructing feature data based on the behavior information, the feature data includes general feature data and feature data of at least two dimensions, where the general feature data includes identification information of users and items in the behavior information; training the social sub-model based on the general feature data and social feature data, training the skill sub-model based on the general feature data and skill feature data, training the interest sub-model based on the general feature data and interest feature data, and training the timeliness sub-model based on the general feature data and timeliness feature data.

Different types of data (videos, pictures, texts) and different topics of data are required to be recommended for different scenarios, and users have different preferences. For example, for a recommendation scenario of internal learning video, the topic of the data required to be recommended is generally technique learning data, and a user's preference in this scenario is strongly related to the user's job. For a recommendation scenario of forum post, the topic of the data required to be recommended is generally data of discussions on life, products, etc., and the user's preference in this scenario is strongly related to the user's life interests. For a recommendation scenario of colleagues' dynamic, the type of the data required to be recommended is generally short text, picture, and short video, the topic of the data required to be recommended is generally date related to life and work shared by users, and the user's preference in this scenario is strongly related to the user's social relationship management.

The correlations between the scenario for recommendation and different sub-models may be determined based on the type of the data required to be recommended, the topic of the data required to be recommended for the scenario for recommendation, and the user's preference. Therefore, the target sub-model for the scenario for recommendation may be selected based on the correlations between the scenario for recommendation and the different sub-models. For example, the recommendation scenario of colleagues' dynamic is highly correlated with the social dimension, the interest dimension, and the timeliness dimension, therefore, the social sub-model corresponding to the social dimension, the interest sub-model corresponding to the interest dimension, and the timeliness sub-model corresponding to the timeliness dimension may be selected as the target sub-models corresponding to the scenario of colleagues' dynamic. For example, the recommendation scenario of learning video is highly correlated with the social dimension, the skill dimension, the interest dimension, and the timeliness dimension, therefore, the social sub-model corresponding to the social dimension, the skill sub-model corresponding to the skill dimension, the interest sub-model corresponding to the interest dimension, and the timeliness sub-model corresponding to the timeliness dimension may be selected as the target sub-models corresponding to the recommendation scenario of learning video.

In S103, a combination of the target sub-models is used to recommend content for the scenario for recommendation.

All the sub-models may be selected as the target sub-models and combined, and the combination of all the sub-models may be used for the recommendation. Alternatively, part of the sub-models may be selected as the target sub-models and combined, and the combination of the part of the sub-models may be used for the recommendation.

For example, for each item, the item is respectively input into each target sub-model, and the user's behavior towards the item is predicted based on the calculation output by the target sub-models. For example, each target sub-model may output a prediction score, and a final prediction score calculated based on the prediction scores of all the target sub-models is taken as the user's score towards the item. The scores of the items are ranked, and the content recommendation is made based on the ranking result. For example, an item with the highest score is selected to be recommended to the user.

During the combination, proportions of different target sub-models are different, which may be specifically implemented by weighting the target sub-models. Specifically, for each item, a weighted score of the prediction scores of all the target sub-models may be calculated in combination with a model weight of each target sub-model. For example, the weighted score may be a sum of products obtained by multiplying a prediction score output by each target sub-model with a model weight of the target sub-model. The weighted scores of the items are ranked, and the recommendation is made based on the ranking result. For example, an item with the highest weighted score is recommended to the user.

A corresponding model weight may be configured for each target sub-model after the target sub-models are selected. Alternatively, the model weights may be configured during the selection of the target sub-models. A model weight of a target sub-model may be determined based on a correlation between the scenario for recommendation and the target sub-model. For example, the higher the correlation between the scenario for recommendation and the target sub-model, the greater the model weight of the target sub-model, and the lower the correlation between the scenario for recommendation and the target sub-model, the smaller the model weight of the target sub-model.

In an optional embodiment of the present disclosure, the combination of the target sub-models is used to obtain a ranking model corresponding to the scenario for recommendation, and then the ranking model is used to recommend content for the scenario for recommendation. To understand simply, the ranking model is constructed based on the target sub-models, and then used to recommend content for the scenario for recommendation.

For example, for the recommendation scenario of colleagues' dynamics, the social sub-model corresponding to the social dimension, the interest sub-model corresponding to the interest dimension, and the timeliness sub-model corresponding to the timeliness dimension are selected to make a combination, so as to obtain a final ranking model for the recommendation scenario of colleagues' dynamics, and then the ranking model is used to recommend content for the recommendation scenario of colleagues' dynamics.

For example, for the recommendation scenario of learning video, the social sub-model corresponding to the social dimension, the skill sub-model corresponding to the skill dimension, the interest sub-model corresponding to the interest dimension, and the timeliness sub-model corresponding to the timeliness dimension are selected to make a combination, so as to obtain a final ranking model for the recommendation scenario of learning video, and then the ranking model is used to recommend content for the recommendation scenario of learning video.

In an implementable embodiment, for each user, the ranking model may be used to predict the user's behavior scores on a plurality of items, and items with high scores are selected to be recommended to the user. For example, an item corresponding to the highest score is selected to be recommended to the user.

In another implementable embodiment, different model weights may be configured for the target sub-models, and the ranking model corresponding to the scenario for recommendation is constructed based on the target sub-models and model weights of the target sub-models. That is, the ranking model is constructed based on the target sub-models and the model weights of the target sub-models, and the ranking model is used to recommend content for the scenario for recommendation.

For the plurality of items, an item is respectively input into the target sub-models corresponding to the scenario for recommendation, and each sub-model outputs a prediction score for the item. The prediction score may represent a probability that the user performs a behavior operation on the item. The ranking model is used to calculate a weighted score of the prediction scores output by the target sub-models.

In the embodiments of the present disclosure, the feature data is constructed from the behavior information of the plurality of scenarios, and at least two sub-models are constructed based on the feature data. In different scenarios, the sub-models are selected for a combination to perform the ranking and the recommendation. In this way, it is not necessary to construct a ranking model for each scenario respectively, which simplifies the recommendation process. In addition, the data of each scenario is used as the training data to train the sub-models, so that the user may be described more comprehensively. As such, the effect of the recommendation based on these sub-models may be improved.

In an optional embodiment, as shown in FIG. 2, the recommendation method for a user provided by the embodiments of the present disclosure may further include S201.

In S201, a model weight of each sub-model is received.

For example, an input interface may be provided; and the model weight of each sub-model inputted through the input interface may be received.

In an implementable embodiment, the input interface may include a model weight input box corresponding to each sub-model, and a content provider background, for example, background staff may input the model weight of each sub-model for the scenario for recommendation in the input box. In this way, the electronic device may receive the model weight of each sub-model inputted through the input interface.

Different scenarios have different emphases, that is, correlations between different scenarios and different sub-models are different. A corresponding model weight for a sub-model may be configured according to correlations between the scenario and different sub-models. For ease of understanding and calculation, in general, the model weight is in a range of [0, 1), and a sum of the model weights of the sub-models is 1. In a case where a weight of a sub-model is 0, it means that the scenario for recommendation is not related to this sub-model, and it may be understood that for the scenario for recommendation, this sub-model is not selected as a target sub-model for the scenario for recommendation. In other words, in the embodiments of the present disclosure, a sub-model with a sub-model weight being not zero is used as the target sub-model corresponding to the scenario for recommendation.

S102 may include: for each sub-model, in response to the model weight of the sub-model being not zero, determining the sub-model as the target sub-model.

After obtaining the target sub-model by selection, based on a combination of the target sub-models and the model weights of the target sub-models, the content is recommended for the scenario for recommendation.

For the plurality of items, an item is respectively inputted into the target sub-models, and each target sub-model outputs a prediction score for the item. The prediction score may represent a probability that the user may perform a behavior operation on the item. Then, a product of each target sub-model and a model weight of the target sub-model is calculated, and products corresponding to the target sub-models are added together to obtain a weighted score of the prediction scores output by the target sub-models. Each item is calculated to obtain a weighted score corresponding to the item, and the weighted scores of all the items are ranked. The recommendation may be made based on the ranking result. For example, an item with the highest weighted score is selected to be recommended to the user.

In an implementable embodiment, a ranking model may be constructed based on the target sub-models and the model weights of the target sub-models.

After receiving the model weight of each sub-model inputted through the input interface, it is determined that whether a model weight of each sub-model is zero, and then a sub-model with a model weight being not zero is selected as a target sub-model for the scenario for recommendation. Then, based on the model weights, the target sub-models are combined to obtain the ranking model corresponding to the scenario for recommendation.

In this case, the model weights of the sub-models are flexibly configured for the scenario for recommendation, so as to determine the target sub-models corresponding to the scenario for recommendation. Based on the combination of the sub-models and the model weights of the sub-models, the ranking model corresponding to the scenario for recommendation is obtained, without separately training a ranking model for each scenario, thereby simplifying the model training process and the recommendation process. In addition, based on the combination of the target sub-models and the model weights of the target sub-models, the ranking model matched with the scenario for recommendation may be obtained, so that the recommendation based on the ranking model may be suitable for the scenario for recommendation, and the recommendation effect may be improved.

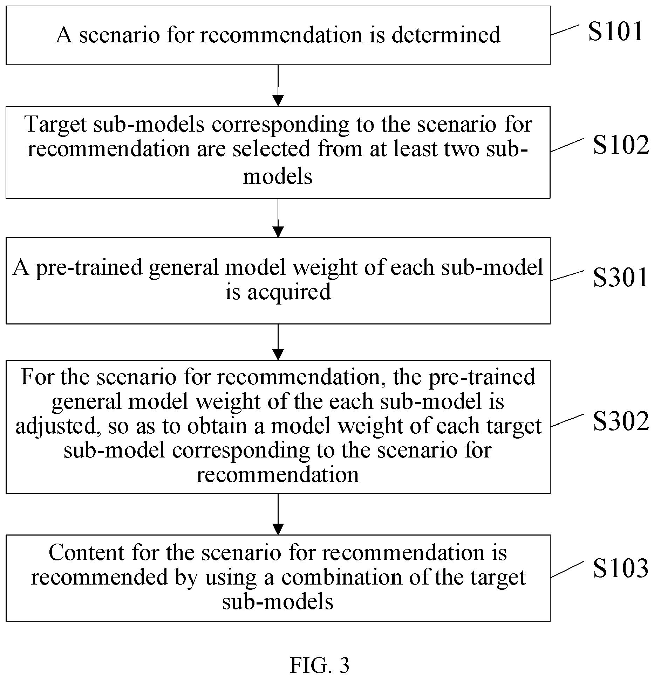

In another optional embodiment, as shown in FIG. 3, the method for recommending content provided by the embodiments of the present disclosure may further include following S301 and S302.

In S301, a pre-trained general model weight of each sub-model is acquired.

Here, the general model weight of each sub-model may be obtained by training based on the sub-models and all feature data used in training the sub-models. Specifically, a process of training the general model weight will be described in detail in following embodiments, which is not described here.

In S302, for the scenario for recommendation, the pre-trained general model weight of each sub-model is adjusted, so as to obtain a model weight of the each target sub-model corresponding to the scenario for recommendation.

The adjustment may be performed based on the general model weight. According to a ratio between the general model weights of the sub-models, the general model weight may be adjusted by using correlations between the scenario for recommendation and the sub-models, so as to obtain the weights of the models corresponding to the scenario for recommendation. For example, three sub-models are included, and general model weights corresponding to the three sub-models are 0.1, 0.3, and 0.6, respectively. For the scenario for recommendation, based on the type of the data required to be recommended, the topic of data required to be recommended for the scenario for recommendation, and the user's preference, if it is determined that a correlation between the scenario for recommendation and a sub-model 2 is low, then the model weight of the sub-model 2 may be adjusted to a lower value, for example, adjusted to 0.2, 0.2, and 0.6.

In this way, based on the combination of the target sub-models and the model weights of the target sub-models, the content recommendation may be made for the scenario for recommendation.

In an implementable embodiment, a ranking model may be constructed based on the target sub-models and the model weights of the target sub-models.

In the embodiments of the present disclosure, adjustment may be made with reference to the pre-trained general model weights of the sub-models, so as to obtain the model weights of the target sub-models corresponding to the scenario for recommendation.

An embodiment of the present disclosure provides a method for training a ranking model, which may include: acquiring behavior information of at least two scenarios; constructing feature data based on the behavior information, where the feature data includes general feature data and feature data of at least two dimensions; and for the at least two dimensions, training sub-models of the at least two dimensions based on the general feature data and the feature data of the at least two dimensions.

In the embodiments of the present disclosure, the behavior information of the at least two scenarios may be used to construct the feature data, and at least two sub-models of the at least two dimensions may be trained based on the feature data, so as to train a general sub-model. In this way, during the recommendation process, sub-models may be flexibly selected for a combination, so as to make recommendations for different recommendation scenarios without separately training a ranking model for each recommendation scenario, thereby simplifying the ranking process and the recommendation process.

In addition, each sub-model to be selected is trained based on the feature data constructed from the behavior information of the plurality of scenarios. It is possible to use a large amount of training data for the model training, and make full use of the behavior information in each scenario for the model training, so that the learning ability of the model is improved and the performance of the trained model is improved, thereby improving the ranking performance and recommendation performance. Also, the problem that using the same recommendation model for all scenarios for recommendation may be inapplicable to different user interests and preferences, item types, etc. in various scenarios, and that the recommendation effect is poor may be avoided, and the recommendation effect may be improved.

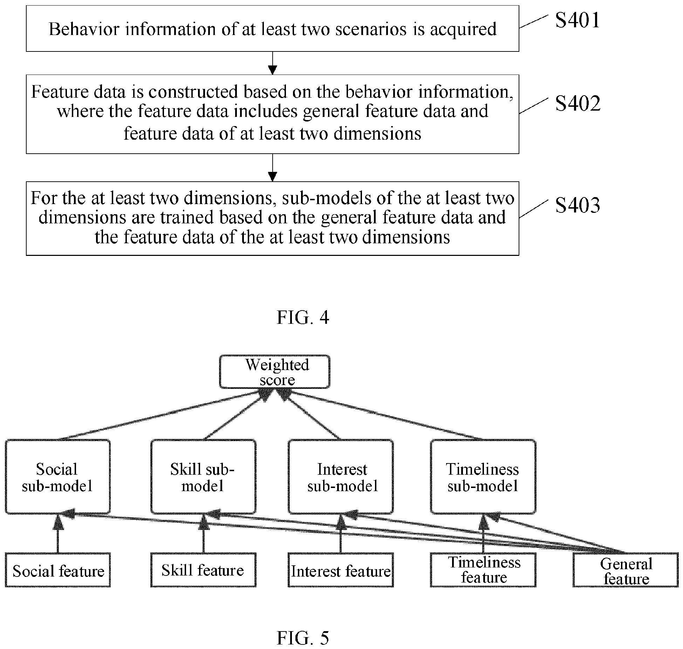

FIG. 4 shows a flowchart of a method for training a ranking model provided by an embodiment of the present disclosure. Referring to FIG. 4, the method for training a ranking model provided by the embodiments of the present disclosure may include following S401 to S403.

In S401, behavior information of at least two scenarios is acquired.

Here, the behavior information represents behavior information of a user towards an item.

For each scenario, a plurality of pieces of behavior information may be obtained. One behavior information may be understood as representing information of a behavior of a user towards an item, and a plurality of pieces of behavior information may represent information of behaviors of a plurality of users towards a plurality of items.

The behavior information of the at least two scenarios may also be understood as training data, which may be constructed by using buried point logs of a plurality of scenarios.

For each scenario, a behavior log of the scenario may be collected, which may also be understood as the collection of behavior information in the scenario.

The behavior information of the at least two scenarios may include: for each scenario, a user's ID (identification), an item ID, a portrait, an item characteristic, a corresponding scenario ID, behavior time, and a specific behavior such as clicking, liking, commenting, bookmarking, etc.

In S402, feature data is constructed based on the behavior information.

The feature data includes general feature data and feature data of the at least two dimensions.

Here, the general feature data includes user identification information and item identification information in the behavior information.

For each behavior information, the behavior information may be understood as including the general feature data and the feature data of the at least two dimensions, where the dimensions may be divided in different ways. For example, the dimensions may include a user dimension and an item dimension, or may include a social dimension, a skill dimension, a timeliness dimension, an interest dimension, etc.

Specifically, constructing the feature data based on the behavior information may be, for each behavior information, extracting, from a general dimension and the at least two dimensions, feature data of these dimensions in the behavior information. It may also be understood that, for each behavior information, the behavior information is divided to include the general feature data and the feature data of the at least two dimensions.

The general feature data includes general feature data extracted from a plurality of pieces of behavior information, and the feature data of the at least two dimensions also includes feature data extracted from the plurality of pieces of behavior information in these dimensions.

In S403, for the at least two dimensions, sub-models of the at least two dimensions are trained based on the general feature data and the feature data of the at least two dimensions.

For each dimension, the sub-model of this dimension may be trained based on the general feature data and the feature data of this dimension. In this way, a sub-model of each dimension from the at least two dimensions may be trained.

The sub-models may be used to predict a user's behavior towards an item. For example, the sub-model may output a prediction score on the user's behavior towards the item.

For example, a first dimension, a second dimension, and a third dimension are included. For the first dimension, a sub-model of the first dimension is trained based on the general feature data and feature data of the first dimension. That is, the sub-model of the first dimension is trained based on the general feature data and the feature data of the first dimension, where the feature data of the first dimension is respectively extracted from a plurality of pieces of behavior information, and the sub-model may be called a first dimension sub-model. For the second dimension, a sub-model of the second dimension is trained based on the general feature data and feature data of the second dimension. That is, the sub-model of the second dimension is trained based on the general feature data and the feature data of the second dimension, where the feature data of the second dimension is respectively extracted from a plurality of pieces of behavior information, and the sub-model may be called a second dimension sub-model. For the third dimension, a sub-model of the third dimension is trained based on the general feature data and feature data of the third dimension. That is, the sub-model of the third dimension is trained based on the general feature data and the feature data of the third dimension, where the feature data of the third dimension is respectively extracted from a plurality of pieces of behavior information, and the sub-model may be called a third dimension sub-model. In this way, the sub-models corresponding to three dimensions may be trained, namely the first dimension sub-model, the second dimension sub-model, and the third dimension sub-model.

In this way, in the recommendation process, after the scenario for recommendation is determined, target sub-models corresponding to the scenario for recommendation may be selected from at least two sub-models. For example, the target sub-models corresponding to the scenario for recommendation are selected from the first dimension sub-model, the second dimension sub-model, and the third dimension sub-model. A ranking model corresponding to the scenario for recommendation is constructed based on the target sub-models, and the ranking model is used to recommend content for the scenario for recommendation. Specifically, the process of selecting the target sub-models from the at least two sub-models to construct the ranking model corresponding to the scenario for recommendation and then making the recommendation has been described in detail in the above-mentioned embodiments, which will not be repeated here.

The sub-model may be a deep learning model, and the embodiments of the present disclosure do not limit a structure of the sub-model. In an implementable embodiment, the sub-model may be a wide&deep model, which is a hybrid model composed of a single-layer wide part and a multi-layer deep part. A main function of the wide part is to make the model have a strong "memory ability", and a main function of the deep part is to make the model have a "generalization ability". Due to this structural feature, the model has the advantages of both the logistic regression and the deep neural network. In the embodiments of the present disclosure, the sub-model adopts such a structure, that is, the sub-model may have both the logistic regression and the deep neural network.

In an implementable way, the feature data may be marked. For example, for feature data of each dimension, a user's behavior for the feature data of the dimension is marked, and the marked user's behavior for the feature data of the dimension is understood as a true value.

Specifically, for a certain dimension, a deep learning model is selected as an initial model. The general feature data, the feature data of this dimension, and a corresponding true value are inputted into the initial model, and a difference between an output of the initial model and the true value is made to be smaller than a preset difference value by adjusting model parameters. The above-mentioned process of adjusting model parameters is performed on data of a plurality of features of this dimension, and the above-mentioned process of adjusting the model parameters on data of one feature of this dimension may be understood as one iteration. When the number of iterations reaches a preset number, where the specific preset number is determined according to actual needs or experience, such as 1000 times, 2000 times, etc., or when the difference between the output of the model and the true value converges until the difference does not change after a plurality of times of iterations, the training process ends and the trained sub-model of this dimension is obtained.

The training process for the sub-model in a certain dimension is only an illustration, any implementable model training process may be adopted in the embodiments of the disclosure, and the embodiments of the disclosure does not limit the specific training method. A training process for a sub-model corresponding to each dimension may refer to the above-mentioned model training process, or a different training method may be adopted for a training process of a sub-model corresponding to a different dimension.

In this way, the sub-models of different dimensions may be trained based on the behavior information in the plurality of scenarios. The behavior information in the plurality of scenarios is considered during the training process of each sub-model, so that the training data based on which the model is trained may be more abundant, thereby improving the learning ability of the model and the performance of the trained model. By comprehensively considering the behavior information in the plurality of scenarios, the user may be described more comprehensively, and by considering common points and connections between behavior information in the plurality of scenarios, the models may be trained to be more accurate, thereby improving the recommendation effect when making recommendations based on these sub-models.

In the office field, there are differences between the recommendation scenarios. Different types of data (videos, pictures, and texts) and different topics of data are required to be recommended for different scenarios, and users have different preferences. For example, for a recommendation scenario of internal learning video, the topic of the data required to be recommended is generally technique learning data, and the user's preference in this scenario is strongly related to the user's job. For a recommendation scenario of forum post, the topic of the data required to be recommended is generally data of discussion on life, products, etc., and the user's preference in this scenario is strongly related to the user's life interests. For a recommendation scenario of colleagues' dynamic, the type of the data required to be recommended is generally short text, picture, and short video, the topic of the data required to be recommended is generally date related to life and work shared by users, and the user's preference in this scenario is strongly related to the user's social relationship management. Also, there are connections between the respective recommendation scenarios. For example, a set of users in each recommendation scenario is consistent, where the users are all internal employees of a company; and interests in different recommendation scenarios have overlapping and deep connections. Based on this, in an optional embodiment, the method for training a ranking model provided by the embodiments of the present disclosure may be applied to the office field, and the scenarios may include the recommendation scenario of internal learning video the recommendation scenario of forum post, and the recommendation scenario of colleagues' dynamic, etc. in the office field.

In the embodiments of the present disclosure, acquiring the behavior information of the plurality of scenarios may include: acquiring behavior information of the recommendation scenario of internal learning video, behavior information of the recommendation scenario of forum post, and behavior information of the recommendation scenario of colleagues' dynamic, etc., and the sub-models are trained based on the behavior information of these scenarios.

S402 may include: for each behavior information, extracting identification information from the behavior information as general feature data corresponding to the behavior information; and extracting, from the at least two dimensions, feature data respectively corresponding to the at least two dimensions in the behavior information.

Here, the at least two dimensions include at least two of: a social dimension, a skill dimension, an interest dimension, or a timeliness dimension.

Specifically, for each behavior information, user identification information, item identification information, item author identification information, and scenario identification information in the behavior information may be extracted, and the user identification information, the item identification information, the item author identification information, and the scenario identification information in the behavior information may be used as the general feature data corresponding to the behavior information.

For example, the general feature includes: a unique identifier of a user, a unique identifier of an item, a unique identifier of an item author, and a scenario ID.

The social features may be calculated through a set of users in the same department, a set of close users, and behaviors of users on items (publishing, liking, and commenting). A weight of the users in the same department is 1, and a weight of the close users is intimacy (0 to 1), where data of the close users may be mined from chat data, etc. The final feature is a weight of the item publisher, the number of likers, a weighted sum of the likers, the number of commenters, a weighted sum of the commenters, etc.

The skill feature includes: job information, a department skill label, a personal skill label, an item department label, and an item skill label.

The interest feature includes: a user interest label and an item interest label, where the labels include labels classified in multiple ways, such as coarse-grained labels and fine-grained labels, etc.

The timeliness feature includes: behavior time, item release time, time of item being commented on, and/or time of item being liked.

S403 may include the following operations.

For the social dimension, the social sub-model is trained based on the general feature data and the social feature data.

For the skill dimension, the skill sub-model is trained based on the general feature data and the skill feature data.

For the interest dimension, the interest sub-model is trained based on the general feature data and the interest feature data.

For the timeliness dimension, the timeliness sub-model is trained based on the general feature data and the timeliness feature data.

Specifically, for each dimension, the process of training the sub-model corresponding to the each dimension has been described in detail in the above-mentioned embodiments. For the process of training the social sub-model for the social dimension, the process of training the skill sub-model for the skill dimension, the process of training the interest sub-model for the interest dimension, and the process of training the timeliness sub-model for the timeliness dimension, reference may be made to the above-mentioned process of training the sub-model corresponding to the each dimension, which will not be repeated here.

For the social dimension, when the social sub-model is trained based on the general feature data and the social feature data, only the dimension is required to be specified to the social dimension, the feature data corresponding to the dimension used in the training process is required to be specified to the social feature data, and then training is performed based on the general feature data and the social feature data, so as to obtain the social sub-model.

For the skill dimension, when the skill sub-model is trained based on general feature data and the skill feature data, only the dimension is required to be specified to the skill dimension, the feature data corresponding to the dimension used in the training process is required to be specified to the skill feature data, and then training is performed based on the general feature data and the skill feature data, so as to obtain the skill sub-model.

For the interest dimension, when the interest sub-model is trained based on the general feature data and the interest feature data, only the dimension is required to be specified to the interest dimension, the feature data corresponding to the dimension used in the training process is required to be specified to the interest feature data, and then training is performed based on the general feature data and the interest feature data, so as to obtain the interest sub-model.

For the timeliness dimension, when the timeliness sub-model is trained based on the general feature data and the timeliness feature data, only the dimension is required to be specified to the timeliness dimension, the feature data corresponding to the dimension used in the training process is required to be specified to the timeliness feature data, and then training is performed based on the general feature data and the timeliness feature data, so as to obtain the timeliness sub-model.

An item may be selected from a plurality of items to serve as the recommendation content, and the item may be understood as the content to be recommended to the user. For example, the item may be a video, a text, an audio, etc.

For an item, item identification information of the item is used to distinguish the item from other items. The item author identification information may be information of the user who creates and uploads the item.

The social feature data corresponding to the social dimension, the skill feature data corresponding to the skill dimension, the interest feature data corresponding to the interest dimension, and the timeliness feature data corresponding to the timeliness dimension are respectively extracted from the social dimension, the skill dimension, the interest dimension, and the timeliness dimension.

The social dimension refers to a dimension in which the user's social attribute is considered. For example, information such as behaviors of users who interact frequently with the user, and behaviors of users in the same department as the user may be considered in the dimension.

The social sub-model trained based on the general feature data and the social feature data may be understood as a social sub-model corresponding to the social dimension, which focuses on predicting the user's behavior towards the item from the social attribute aspect, and the social sub-model may also be understood as focusing on using the social feature data to recommend content to the user.

The skill dimension refers to a dimension in which the user skill information is considered. For example, information such as the user's skills, and skills of the user's department such as the video processing skill involved in the video generation department, may be considered in the dimension.

The skill sub-model trained based on the general feature data and the skill feature data may be understood as a skill sub-model corresponding to the skill dimension, which focuses on predicting the user's behavior towards the item from the skill information dimension, and the skill sub-model may also be understood as focusing on using the skill feature data to recommend content to the user.

The timeliness dimension refers to a dimension in which information such as user behavior time, and item-related time such as item release time, time of item being liked and/or time of item being commented, is considered.

The timeliness sub-model trained based on the general feature data and the timeliness feature data may be understood as a timeliness sub-model corresponding to the timeliness dimension, which focuses on predicting the user's behavior towards the item from the time dimension, and the timeliness sub-model may also be understood as focusing on using the timeliness feature data to recommend content to the user.

The interest dimension refers to a dimension in which user's interests are considered, for example, an item that the user clicks frequently, etc.

The interest sub-model trained based on the general feature data and the interest feature data may be understood as an interest sub-model corresponding to the interest dimension, which focuses on predicting the user's behavior towards the item from the interest aspect, and the interest sub-model may also be understood as focusing on using the interest feature data to recommend content to the user.

As shown in FIG. 5, the user and item features constructed based on the behavior information of the plurality of scenarios include: the social feature, the skill feature, the interest feature, the timeliness feature and the general feature. The social sub-model is trained based on the social feature and the general feature, the skill sub-model is trained based on the skill feature and the general feature, the interest sub-model is trained based on the interest feature and the general feature, and the timeliness sub-model is trained based on the timeliness feature and the general feature.

Differences and connections between the plurality of recommendation scenarios in the office field may be used to train the social sub-model, the skill sub-model, the interest sub-model, and the timeliness sub-model applicable to the office field. For the recommendation scenarios in the office field, sub-models may be flexibly selected to make the combination for each recommendation scenario, so that recommendations may be more matched with the recommendation scenarios in the office field. Accordingly, the recommendation effect may be improved, the case of training a separate ranking model for each recommendation scenario may be avoided, and the training process may be simplified, thereby simplifying the recommendation process. In addition, during the training process of each sub-model, the behavior information in the plurality of scenarios in the office field is considered, so that the training data based on which the model is trained may be more abundant, thereby improving the learning ability of the model and the performance of the trained model. In addition, by comprehensively considering the behavior information in the plurality of scenarios, the user may be described more comprehensively, and by considering common points and connections between behavior information in the plurality of scenarios, the models may be trained to be more accurate, thereby improving the recommendation effect when making recommendations based on these sub-models.

In a specific recommendation process, recommendation may be made based on a combination of all or part of the respective sub-models.

To understand simply, each sub-model may be understood as a low-level model, and a high-level model may be trained further. The ranking model in the embodiments of the present disclosure may be understood as a hierarchical model. Here, the process of training the high-level model may be understood as training a set of general model weights for the sub-models, and the high-level model may be composed of the sub-models and the model weights corresponding to the sub-models.

As shown in FIG. 5, the weighted score may be calculated by using the social sub-model, the skill sub-model, the interest sub-model, and the timeliness sub-model. For example, for each item, the item may be respectively inputted into the social sub-model, the skill sub-model, the interest sub-model, and the timeliness sub-model, and the social sub-model, the skill sub-model, the interest sub-model and the timeliness sub-model may respectively output a prediction score. Then, based on the social sub-model, the skill sub-model, the interest sub-model and the timeliness sub-model, a final prediction score is calculated as the user's score to the item. The scores of the items are ranked, and content recommendation is made based on the ranking result, for example, the item with the highest score is selected to be recommended to the user.

In an optional embodiment, the method for training a ranking model provided by the embodiments of the present disclosure may further include: training a general model weight of each sub-model based on the sub-models of the at least two dimensions, the general feature data, and the feature data of the at least two dimensions.

Specifically, after each sub-model is trained, the general model weight of each sub-model is trained based on the sub-model of each dimension, the general feature data, and the feature data of each dimension.

The general model weights of the sub-models and the sub-models together form a high-level ranking model. The high-level model, namely the high-level ranking model, may be understood as a total model for weighting scores of all the sub-models.

In an implementable embodiment, the model weight of each sub-model may be understood as a model parameter of the sub-model.

A process of training the generic model weight is similar to a process of adjusting the model parameter.

Specifically, for each feature data, the feature data may be input into the sub-model of each dimension, the general model weight of each sub-model may be adjusted, and when a preset iteration condition is reached, the general model weight of each trained sub-model may be obtained.

In the process of training the general model weight, the general feature data and the feature data of each dimension are integrated, where all the data constitutes the training data for training the general model weight.

For example, for data of each feature (including the general feature data and the feature data of each dimension), the feature data is respectively inputted into the sub-models, and the model weight of each sub-model is adjusted, so that a final weighted score of each sub-model corresponding to an item true value of the feature data is the highest.

In this way, a set of model weights including the general model weights of the sub-models may be trained, and the set of model weights may be stored. During a recommendation process, this set of model weights may be acquired, and adjustment may be performed for different scenarios based on this set of model weights to obtain model weights corresponding to the different scenarios. Then the recommendation may be made for the scenario based on the sub-models and the model weights.

In an embodiment of the present disclosure, a method for constructing a ranking model supporting a plurality of scenarios in the office field may be provided. In a recommendation scenario in the office field, general sub-models may be trained, which may also be understood as low-level models, and then for each recommendation scenario, a ranking model with different emphases and matched with the recommendation scenario may be flexibly configured for recommendation. Specifically, training data may be constructed for the plurality of the scenario ranking models at one time, and a general hierarchical ranking model may be constructed using a deep learning model. In the plurality of scenarios, the underlying models may be flexibly configured to construct a high-level ranking model that adapts to different scenarios and different features for recommendation.

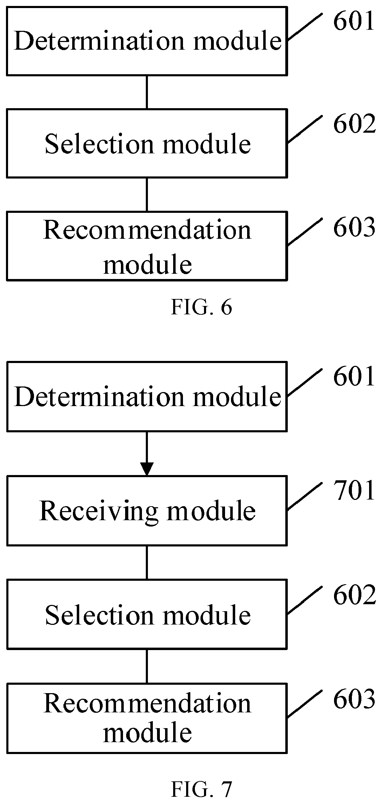

An embodiment of the present disclosure further provides an apparatus for recommending content, as shown in FIG. 6, which may include: a determination module 601, used to determine a scenario for recommendation; a selection module 602, used to select a target sub-model corresponding to the scenario for recommendation from at least two sub-models, where the at least two sub-models include sub-models of at least two dimensions, the sub-models of the at least two dimensions are trained for the at least two dimensions based on general feature data and feature data of the at least two dimensions, the general feature data and the feature data of the at least two dimensions are constructed based on behavior information, and the behavior information includes behavior information of at least two scenarios; and a recommendation module 603, used to recommend content for the scenario for recommendation by using a combination of the target sub-models.

Optionally, as shown in FIG. 7, the apparatus for recommending content further includes: a receiving module 701, used to receive a model weight of each sub-model.

The selection module 602 is specifically used to: for each sub-model, in response to the model weight of the sub-model being not zero, determine the sub-model as the target sub-model.

The recommendation module 603 is specifically used to recommend the content for the scenario for recommendation based on a combination of the target sub-model and a model weight of the target sub-model.

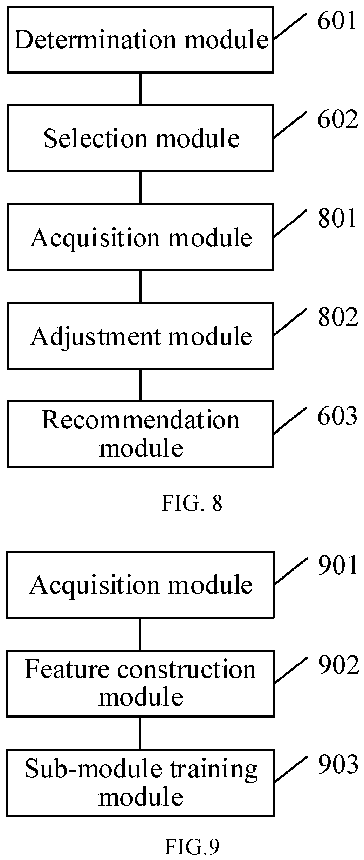

Optionally, as shown in FIG. 8, the apparatus for recommending content further includes: an acquisition module 801, used to acquire a pre-trained general model weight of each sub-model; and an adjustment module 802, used to: for the scenario for recommendation, adjust the pre-trained general model weight of the each sub-model, so as to obtain a model weight of each target sub-model corresponding to the scenario for recommendation.

The recommendation module 603 is specifically used to recommend the content for the scenario for recommendation based on a combination of the target sub-model and a model weight of the target sub-model.

An embodiment of the present disclosure further provides an apparatus for training a ranking model, as shown in FIG. 9, which may include: an acquisition module 901, used to acquire behavior information of at least two scenarios; a feature construction module 902, used to: construct feature data based on the behavior information, where the feature data includes general feature data and feature data of at least two dimensions; and a sub-model training module 903, used to: for the at least two dimensions, train sub-models of the at least two dimensions based on the general feature data and the feature data of the at least two dimensions.

Optionally, the feature construction module 902 is specifically used to: for each behavior information, extract identification information from the behavior information as the general feature data corresponding to the behavior information; and extract, from the at least two dimensions, feature data respectively corresponding to the at least two dimensions in the behavior information, where the at least two dimensions include at least two of: a social dimension, a skill dimension, an interest dimension, or a timeliness dimension.

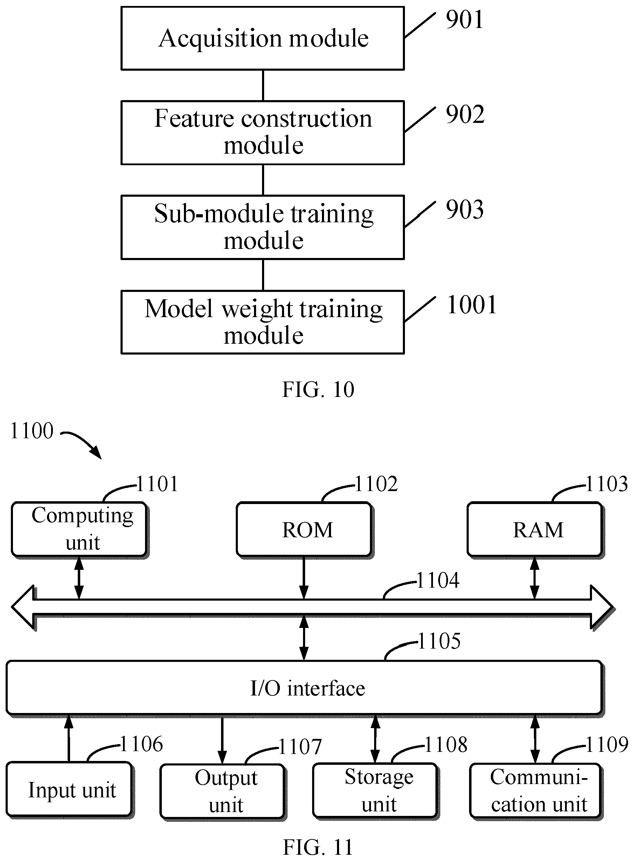

Optionally, as shown in FIG. 10, the apparatus for training a ranking model further includes: a model weight training module 1001, configured to train a general model weight of each sub-model based on the sub-models of the at least two dimensions, the general feature data, and the feature data of the at least two dimensions.

In the technical solution of the present disclosure, an acquisition, a storage, a use, a processing, a transmission, a provision, a disclosure and an application of user personal information and location information involved comply with provisions of relevant laws and regulations, take essential confidentiality measures, and do not violate public order and good custom. In the technical solution of the present disclosure, user's authorization or consent is obtained before the user's personal information is acquired or collected.

According to embodiments of the present disclosure, the present disclosure further provides an electronic device, a readable storage medium, and a computer program product.

FIG. 11 shows a schematic block diagram of an exemplary electronic device 1100 that may be used to implement embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 11, the electronic device 1100 may include a computing unit 1101, which may perform various appropriate actions and processing based on a computer program stored in a read-only memory (ROM) 1102 or a computer program loaded from a storage unit 1108 into a random access memory (RAM) 1103. Various programs and data required for the operation of the electronic device 1100 may be stored in the RAM 1103. The computing unit 1101, the ROM 1102 and the RAM 1103 are connected to each other through a bus 1104. An input/output (I/O) interface 1105 is also connected to the bus 1104.

Various components in the electronic device 1100, including an input unit 1106 such as a keyboard, a mouse, etc., an output unit 1107 such as various types of displays, speakers, etc., a storage unit 1108 such as a magnetic disk, an optical disk, etc., and a communication unit 1109 such as a network card, a modem, a wireless communication transceiver, etc., are connected to the I/O interface 1105. The communication unit 1109 allows the electronic device 1100 to exchange information/data with other devices through a computer network such as the Internet and/or various telecommunication networks.

The computing unit 1101 may be various general-purpose and/or special-purpose processing components with processing and computing capabilities. Some examples of the computing unit 1101 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 1101 may perform the various methods and processes described above, such as the method for recommending content. For example, in some embodiments, the method for recommending content may be implemented as a computer software program that is tangibly contained on a machine-readable medium, such as a storage unit 1108. In some embodiments, part or all of a computer program may be loaded and/or installed on the electronic device 1100 via the ROM 1102 and/or the communication unit 1109. When a computer program is loaded into the RAM 1103 and executed by the CPU 1101, one or more steps in any of the method for recommending content described above may be executed. Alternatively, in other embodiments, the computing unit 1101 may be configured to perform the method for recommending content in any other appropriate way (for example, by means of firmware).

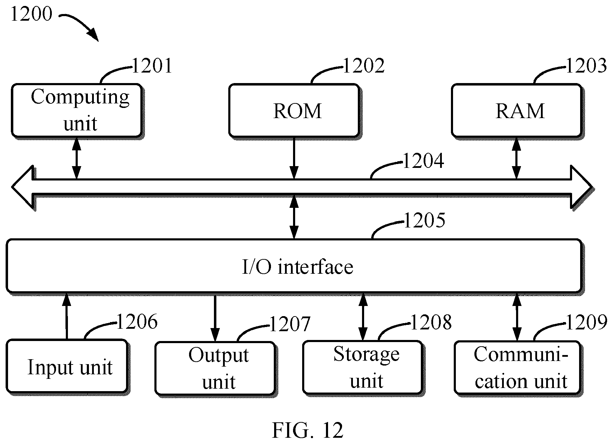

FIG. 12 shows a schematic block diagram of an exemplary electronic device 1200 that may be used to implement embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 12, the electronic device 1200 may include a computing unit 1201, which may perform various appropriate actions and processing based on a computer program stored in a read-only memory (ROM) 1202 or a computer program loaded from a storage unit 1208 into a random access memory (RAM) 1203. Various programs and data required for the operation of the electronic device 1200 may be stored in the RAM 1203. The computing unit 1201, the ROM 1202 and the RAM 1203 are connected to each other through a bus 1204. An input/output (I/O) interface 1205 is also connected to the bus 1204.

Various components in the electronic device 1200, including an input unit 1206 such as a keyboard, a mouse, etc., an output unit 1207 such as various types of displays, speakers, etc., a storage unit 1208 such as a magnetic disk, an optical disk, etc., and a communication unit 1209 such as a network card, a modem, a wireless communication transceiver, etc., are connected to the I/O interface 1205. The communication unit 1209 allows the electronic device 1200 to exchange information/data with other devices through a computer network such as the Internet and/or various telecommunication networks.

The computing unit 1201 may be various general-purpose and/or special-purpose processing components with processing and computing capabilities. Some examples of the computing unit 1201 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 1201 may perform the various methods and processes described above, such as the method for training a ranking model. For example, in some embodiments, the method for training a ranking model may be implemented as a computer software program that is tangibly contained on a machine-readable medium, such as a storage unit 1208. In some embodiments, part or all of a computer program may be loaded and/or installed on the electronic device 1200 via the ROM 1202 and/or the communication unit 1209. When a computer program is loaded into the RAM 1203 and executed by the CPU 1201, one or more steps in any of the method for training a ranking model described above may be executed. Alternatively, in other embodiments, the computing unit 1201 may be configured to perform the method for training a ranking model in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or a cloud host. It is a host product in the cloud computing service system to solve shortcomings of difficult management and weak business scalability existing in the traditional physical host and VPS (Virtual Private Server) service. The server may also be a server of a distributed system or a server combined with a blockchain.

It should be understood that various forms of processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method for recommending content, comprising:
determining (S101) a scenario for recommendation;
selecting (S102) target sub-models corresponding to the scenario for recommendation from at least two sub-models, wherein the at least two sub-models comprise sub-models of at least two dimensions, the sub-models of the at least two dimensions are trained for the at least two dimensions based on general feature data and feature data of the at least two dimensions, the general feature data and the feature data of the at least two dimensions are constructed based on behavior information, and the behavior information comprises behavior information of at least two scenarios; and
recommending (S103) content for the scenario for recommendation by using a combination of the target sub-models.

2. The method of claim 1, further comprising:
receiving (S201) a model weight of each sub-model,
wherein the selecting (S102) target sub-models corresponding to the scenario for recommendation from at least two sub-models comprises:
for each sub-model, in response to the model weight of the sub-model being not zero, determining the sub-model as the target sub-model; and
wherein the recommending (S103) content for the scenario for recommendation by using a combination of the target sub-models comprises:
recommending the content for the scenario for recommendation based on a combination of the target sub-models and model weights of the target sub-models.

3. The method of claim 1, further comprising:
acquiring (S301) a pre-trained general model weight of each sub-model; and
for the scenario for recommendation, adjusting (S302) the pre-trained general model weight of the each sub-model, so as to obtain a model weight of each target sub-model corresponding to the scenario for recommendation,
wherein the recommending (S103) content for the scenario for recommendation by using a combination of the target sub-models comprises:
recommending the content for the scenario for recommendation based on a combination of the target sub-models and model weights of the target sub-models.

4. A method for training a ranking model, comprising:
acquiring (S401) behavior information of at least two scenarios;
constructing (S402) feature data based on the behavior information, wherein the feature data comprises general feature data and feature data of at least two dimensions; and
for the at least two dimensions, training (S403) sub-models of the at least two dimensions based on the general feature data and the feature data of the at least two dimensions.

5. The method of claim 4, wherein the constructing feature data based on the behavior information comprises:
for each behavior information, extracting identification information from the behavior information as the general feature data corresponding to the behavior information; and
extracting, from the at least two dimensions, feature data respectively corresponding to the at least two dimensions in the behavior information, wherein the at least two dimensions comprise at least two of: a social dimension, a skill dimension, an interest dimension, or a timeliness dimension.

6. The method of claim 4, further comprising:
training a general model weight of each sub-model based on the sub-models of the at least two dimensions, the general feature data, and the feature data of the at least two dimensions.

7. An apparatus for recommending content, comprising:
a determination module (601), configured to determine a scenario for recommendation;
a selection module (602), configured to select target sub-models corresponding to the scenario for recommendation from at least two sub-models, wherein the at least two sub-models comprise sub-models of at least two dimensions, the sub-models of the at least two dimensions are trained for the at least two dimensions based on general feature data and feature data of the at least two dimensions, the general feature data and the feature data of the at least two dimensions are constructed based on behavior information, and the behavior information comprises behavior information of at least two scenarios; and
a recommendation module (603), configured to recommend content for the scenario for recommendation by using a combination of the target sub-models.

8. The apparatus of claim 7, further comprising:
a receiving module (701), configured to receive a model weight of each sub-model,
wherein the selection module (602) is specifically configured to: for each sub-model, in response to the model weight of the sub-model being not zero, determine the sub-model as the target sub-model; and
wherein the recommendation module (603) is specifically configured to recommend the content for the scenario for recommendation based on a combination of the target sub-models and model weights of the target sub-models.

9. The apparatus of claim 7, further comprising:
an acquisition module (801), configured to acquire a pre-trained general model weight of each sub-model; and
an adjustment module (802), configured to: for the scenario for recommendation, adjust the pre-trained general model weight of the each sub-model, so as to obtain a model weight of each target sub-model corresponding to the scenario for recommendation;
wherein the recommendation module (603) is specifically configured to recommend the content for the scenario for recommendation based on a combination of the target sub-models and model weights of the target sub-models.

10. An apparatus for training a ranking model, comprising:
an acquisition module (901), configured to acquire behavior information of at least two scenarios;
a feature construction module (902), configured to: construct feature data based on the behavior information, wherein the feature data comprises general feature data and feature data of at least two dimensions; and
a sub-module training module (903), configured to: for the at least two dimensions, train sub-models of the at least two dimensions based on the general feature data and the feature data of the at least two dimensions.

11. The apparatus of claim 10, wherein the feature construction module (902) is specifically configured to: for each behavior information, extract identification information from the behavior information as the general feature data corresponding to the behavior information; and extract, from the at least two dimensions, feature data respectively corresponding to the at least two dimensions in the behavior information, wherein the at least two dimensions comprise at least two of: a social dimension, a skill dimension, an interest dimension, or a timeliness dimension.

12. The apparatus of claim 11, further comprising:
a model weight training module (1001), configured to train a general model weight of each sub-model based on the sub-models of the at least two dimensions, the general feature data, and the feature data of the at least two dimensions.

13. An electronic device (1100, 1200), comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 6.

14. A non-transitory computer-readable storage medium having computer instructions stored thereon, wherein the computer instructions allow a computer to implement the method of any one of claims 1 to 6.

15. A computer program product containing a computer program, wherein the computer program, when executed by a processor, causes the processor to implement the method of any one of claims 1 to 6.
